# EUROPEAN PATENT SPECIFICATION

(11) **EP 0 347 071 B1**
(45) Date of publication and mention of the grant of the patent: **31.03.1993**
(21) Application number: 89305556.6
(22) Date of filing: 02.06.1989
(51) Int. Cl.: C03B 9/193

(54) **Plunger assembly for a glassware forming machine**
Pegel für eine Maschine zum Herstellen von Glasgegenständen
Poinçon pour une machine de fabrication d'objets en verre

(30) Priority: 15.06.1988 US 207359
(43) Date of publication of application: 20.12.1989
(73) Proprietor: Emhart Glass Machinery Investments Inc., Wilmington, Delaware 19801 (US)
(72) Inventor: Trahan, Albert J., Vernon Connecticut 06086 (US)
(74) Representative: Wetters, Basil David Peter

(56) References cited:
- EP-A- 0 197 427
- US-A- 4 033 744
- US-A- 4 272 273
- US-A- 4 636 240

## Description

The present invention relates to individual section glassware forming machines which form glassware in the press and blow process and more particularly to the plunger mechanism of such machines which presses a gob of molten glass into a parison or preform.

Because of the highly abrasive nature of the molten glass, plungers are subject to wear and must be periodically replaced. There is a need therefore for plunger assemblies which permit a quick changing of the plunger.

US-A-4272273 discloses a double plunger mechanism for use with the press and blow process, but is primarily concerned with allowing a degree of floating movement in the mechanism. The precise construction which secures the plunger in the mechanism and the method by which it may be changed are not disclosed.

US-A-4033744 discloses a plunger assembly in which the plunger is secured in a plunger head by a type of baynet joint, so that the plunger may easily be removed by rotating is relative to the plunger head and then lifting it out. Such an arrangement permits of quick changing of the plunger head, but the locking system between the plunger and plunger head is not reliable in use, and the addition of further means to secure the plunger in position reduces the ease with which it can be changed.

US-A-4636240 discloses a plunger assembly which comprises a plunger which has two arcuate flanges at its lower end. The assembly also comprises a sleeve, having internal flanges which match with those on the plunger and a spacer member which is locked to a support member by engagement with the threaded upper end of a piston rod of the mechanism. A spring urges the sleeve downwardly with respect to the support member. When a plunger is to be removed, the sleeve is moved upwards relative to the support member and the spacer member against the spring, thus releasing the plunger to allow it to be rotated to disengage the flanges and thus to be removed. The reverse operation allows a new plunger to be positioned in the sleeve and clamped in position. This mechanism allows for fairly rapid exchange of plungers, but is somewhat complex and expensive in construction, and in practice has proved subject to wear.

It is an object of the present invention to provide an improved quick change plunger assembly .

The present invention provides a plunger assembly for use in a glassware forming machine comprising:
a plunger having a tapered portion and a base portion
a plunger holder including
a hollow cylindrical housing having a closed top and an open bottom
an aperture in the closed top of said cylindrical housing for receiving said plunger base portion, and
a pair of opposed locking flanges extending axially downwardly and inwardly from the open bottom of said cylindrical housing,
an adapter assembly including
an annular support collar
a hollow cylindrical body, having a top (X) and a smaller outer diameter than the outer diameter of the collar, extending upwardly from said collar for full insertion into the cylindrical housing through the open bottom so as to support the locking flanges on the annular support collar,
a pair of opposed enlarged diameter portions extending downwardly from the top (X) of said cylindrical body to a location vertically spaced from the collar, said portions defining with the outer diameter of the annular collar opposed areas of said smaller outer diameter extending between the vertically spaced location and said annular collar,
the locking flanges having a vertical height corresponding to the vertical height of said areas of said smaller outer diameter and the internal diameter of said flanges corresponding with said smaller outer diameter so that when the cylindrical body of said adapter assembly is fully inserted into the cylindrical housing of said plunger holder, said plunger holder can be rotated 90° relative to said adapter assembly, whereby vertical separation will be prevented,
means for releasably retaining said plunger holder and said adapter assembly at the 90° rotated orientation, and
means for threadedly securing said adapter assembly to the top of a vertically displaceable piston.

There now follows a description, to be read with reference to the accompanying drawings, of a plunger assembly embodying the invention.

Referring to the drawings:
Figure 1 is an oblique, exploded view of the plunger, the plunger holder and adapter of a plunger assembly according to the invention;
Figure 2 is an axial cross-sectional view of the plunger assembly, with the plunger mounted on the vertically reciprocating piston of one of the cylinders in an individual section forming machine;
Figure 3 is an axial cross-sectional view of the plunger with its cooling tube secured thereto;
Figure 4 is an enlarged view similar to that of Figure 3 illustrating the lower portion of the adapter assembly secured to the reciprocating piston; and
Figure 5 is a view taken along the lines 5-5 of Figure 4.

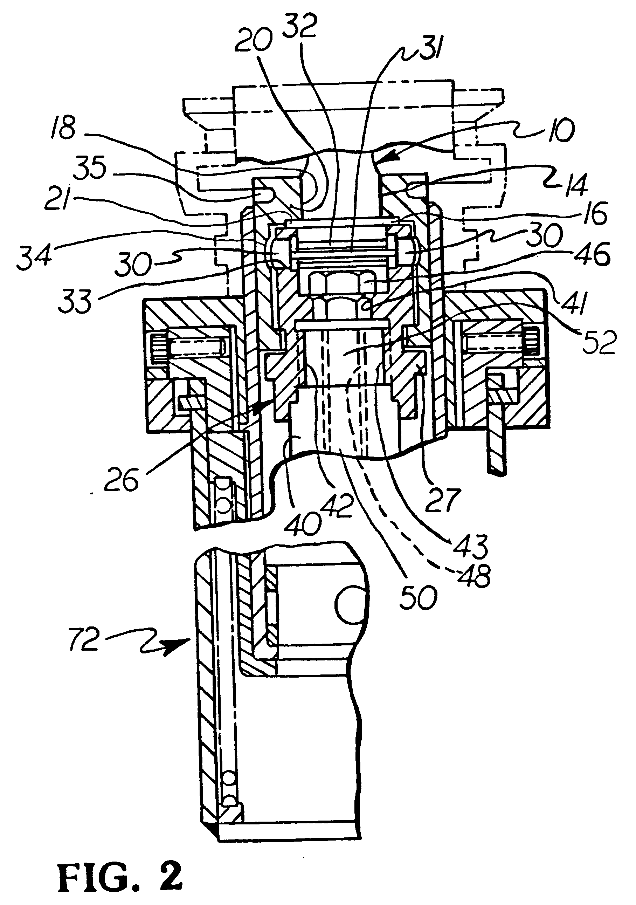

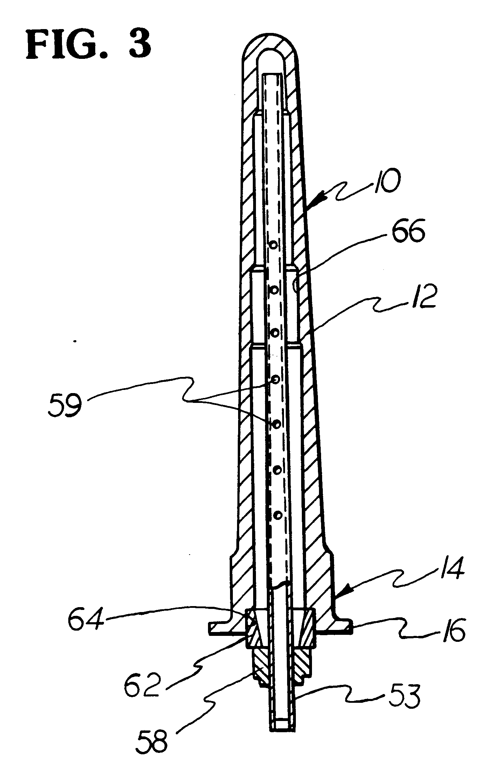

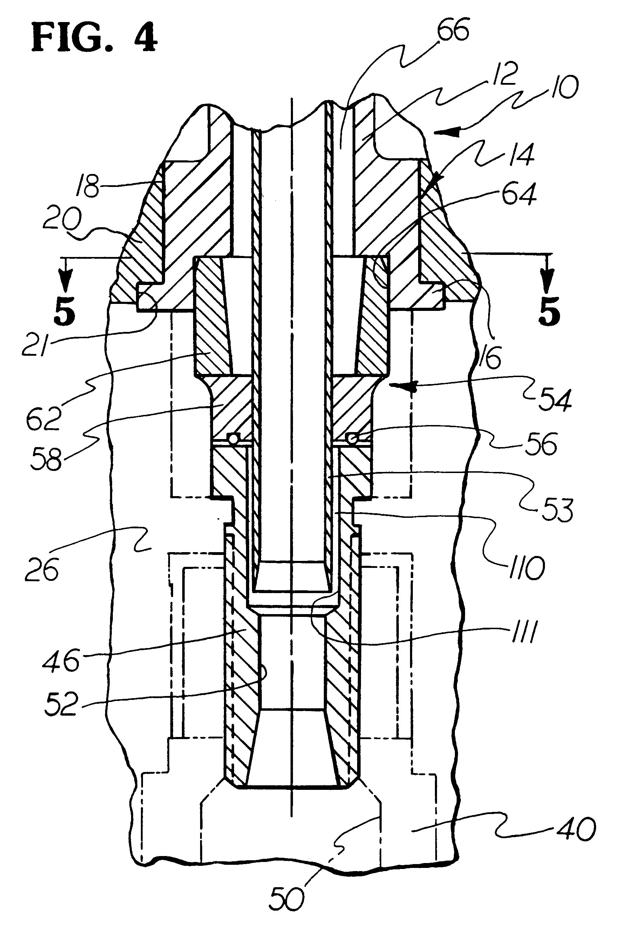

The plunger assembly includes a hollow plunger element 10 which has an elongated tapered upper or plunger portion 12 (Figure 3) and a cylindrical bottom or base portion 14 which ends in an annular flange 16. The cylindrical base portion 14 is press fitted into a thru-bore 18 in the top wall of a plunger holder 20 (Figures 2 and 4). This thru-bore 18 has a suitable recess 21 to partially receive the annular flange 16 thereby defining the bottom surface of the plunger element 10 as a bearing surface. The plunger holder 20 is cylindrical in shape having an open bottom 24, which is partially closed by a pair of opposed, inwardly extending locking flanges 25.

The plunger assembly also includes an adapter 26 which has an upper portion above an annular collar 27. The upper portion has a cylindrical body 28 which has a pair of opposed increased diameter portions 29 which define an outer diameter corresponding to the inner diameter of the plunger holder opening 24. These increased diameter portions 29 are discontinued at diametrically opposed locations to reduce the outer diameter of the upper portion sufficiently to permit the lowering of the plunger holder over the upper portion of the adapter when the location of these reduced diameter portions correspond to the location of the locking flanges 25. When the plunger holder is fully lowered, the bearing surface of the plunger base will engage the upper surface X of adapter 26.

The distance between the plunger bearing surface and the upper surface of these locking flanges 25 corresponds to the vertical height of the increased diameter portions 29 so that when the plunger holder 20 is fully lowered onto surface X of the adapter 26, the plunger holder can be rotated 90° to locate the locking flanges 25 between these increased diameter portions 29 and the adapter collar 27, thereby preventing vertical separation of the plunger holder and the adapter. An opposed pair of detents 30, which are biased outwardly through detent apertures 33 (Figure 2) by a spring 31 contained within a suitable groove 32 in the plunger adapter and which enter recesses 34 in the plunger holder when so rotated, prevent the unintentional rotation of the plunger holder 20 relative to the adapter 26. There are four recesses; two to locate to retain adapter in position and two to locate the adapter for removal. To join these pieces together by locating the detents in their associated recesses 34 or to release them, a tool (not shown) can be used which has opposed keys for engaging opposed holder slots 35. A pair of notches 34a are cut in the inner wall of the holder at the bottom to cam the detents inwardly as the plunger holder is lowered onto the adapter.

To join the plunger assembly to the vertically reciprocating piston 40, the bottom of the adapter has an upwardly extending threaded bore 42 which threads onto a threaded portion 43 on the top of the piston 40. (The adapter may, if desired, be one piece with the piston and rod 40.) A hex opening 41 permits the use of a hex head tool to thread the adapter onto the piston. To lock these members together, a bolt 46 extends downwardly through the hex opening 41 in the adapter and is threadedly received by a threaded bore 48 in the top portion of the piston 40.

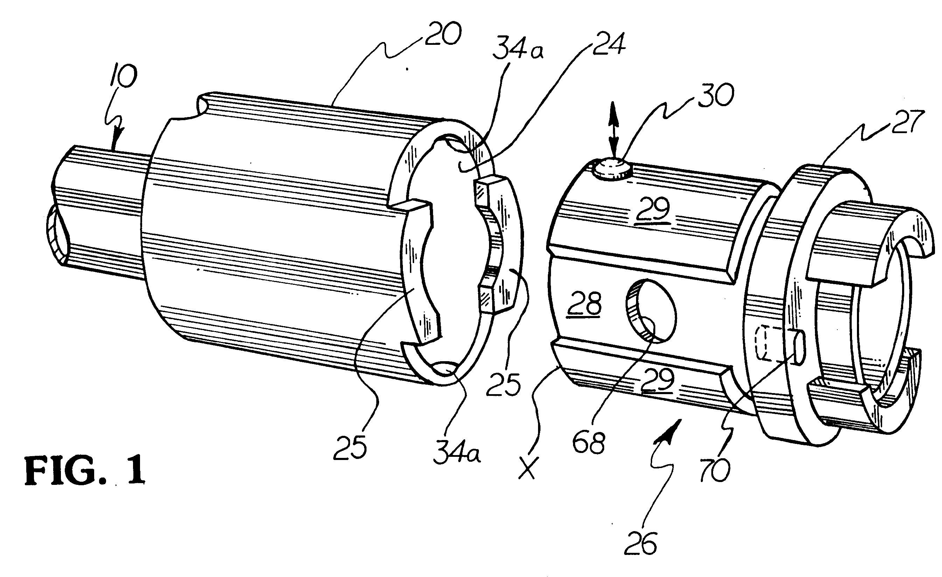

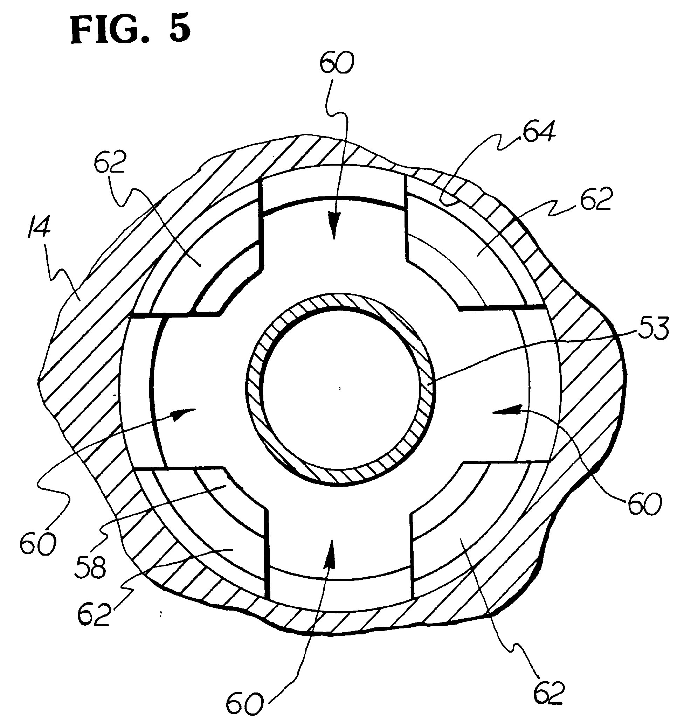

Cooling air is supplied upwardly through the center hole 50 of the piston 40 (Figure 4), through the center hole 52 of the locking bolt 46 and then through the elongated tube 53 of the cooling tube assembly 54 (an "O" ring 56 effects a seal between the locking bolt 46 and the annular collar 58 of the cooling tube assembly to which the cooling tube is secured) and out holes 59 in the cooling tube. This air flows downwardly along the plunger and outwardly through the openings 60 (see Figure 5) between four wedge elements 62 of the cooling tube assembly, which are integral with the annular collar 58 and which are wedgingly received within a recess 64 defined at the entrance of the plunger opening 66 to secure and maintain the cooling tube in precisely centered and axially located within the plunger throughout the operation of the plunger assembly. Since the air has been heated, it has a greater volume than the inleted air. Accordingly, the size of this collective opening 60 should be at least two and one half times larger than the area of the cooling tube 53. The exhausted, heated air passes through opposed holes 68 (Figure 1) in the adapter upper portion and flows downwardly through the channels formed between the enlarged diameter sections 29, the upper body 28 and the plunger holder 20 through holes 70 in the annular adapter collar and into the plunger housing assembly 72 (Figure 2).

## Claims

1. A plunger assembly for use in a glassware forming machine comprising:
a plunger (10) having a tapered portion (12) and a base portion (14),
a plunger holder (20) including
a hollow cylindrical housing having a closed top and an open bottom (24),
an aperture (18) in the closed top of said cylindrical housing for receiving said plunger base portion (14), and
a pair of opposed locking flanges (25) extending axially downwardly and inwardly from the open bottom (24) of said cylindrical housing,
an adapter assembly (26) including
an annular support collar (27)
a hollow cylindrical body (28), having a top (X) and a smaller outer diameter than the outer diameter of the collar, extending upwardly from said collar (27) for full insertion into the cylindrical housing through the open bottom so as to support the locking flanges (25) on the annular support collar (27),
a pair of opposed enlarged diameter portions (29) extending downwardly from the top (X) of said cylindrical body (28) to a location vertically spaced from the collar, said portions defining with the oufer diameter of the annular collar (27) opposed areas of said smaller outer diameter extending between the vertically spaced location and said annular collar (27),
the locking flanges (25) having a vertical height corresponding to the vertical height of said areas of said smaller outer diameter and the internal diameter of said flanges corresponding with said smaller outer diameter so that when the cylindrical body (28) of said adapter assembly is fully inserted into the cylindrical housing of said plunger holder (20), said plunger holder can be rotated 90° relative to said adapter assembly (26), whereby vertical separation will be prevented,
means (30,34) for releasably retaining said plunger holder (20) and said adapter assembly (26) at the 90° rotated orientation, and
means (42) for threadedly securing said adapter assembly to the top of a vertically displaceable piston.

2. A plunger assembly according to claim 1, wherein said releasably retaining means comprises outwardly biased detent means (30) secured to the wall of said cylindrical body (28) and including a detent (30) extending outwardly through a hole formed in each of said enlarged diameter portions (29), and opposed recesses (34) formed in the interior surface of the wall of the cylindrical housing for receiving the detents (30).

3. A plunger assembly according to claim 2, wherein said plunger base portion (14) has an outwardly extending annular flange (16) and said aperture (18) in the closed top of said cylindrical housing (20) includes an internal recess (27) so that when said plunger base portion is fully inserted thereinto, the annular flange (16) of said base portion (14) will project into said recess and downwardly beyond said closed top of said cylindrical housing, thereby defining a bearing surface for the top of the cylindrical body (28) of said adapter assembly (26) when fully inserted into the cylindrical housing of said plunger holder (20).

## Patentansprüche

1. Druckkolbenanordnung zur Verwendung bei einer Maschine zum Herstellen von Glasgegenständen, wobei die Anordnung umfaßt:
einen Druckkolben (10) mit einem kegelförmigen Abschnitt (12) und einem Basisabschnitt (14),
einem Druckkolbenhalter (20), der enthält:
ein hohles zylindrisches Gehäuse mit einer geschlossenen Spitze und einem offenen Boden (24),
eine Öffnung (18) in der geschlossenen Spitze des zylindrischen Gehäuses zum Aufnehmen des Druckkolbenbasisabschnitts (14), und ein Paar entgegengesetzter Verriegelungsflansche (25), die sich axial nach unten und nach innen von dem offenen Boden (25) des zylindrischen Gehäuses erstrecken,
eine Adapteranordnung (26), die enthält:
einen ringförmigen Stützkragen (27),
einen hohlen zylindrischen Körper (28), der eine Spitze (X) hat und dessen äußerer Durchmesser kleiner als der des Kragens ist, wobei sich der Körper nach oben von dem Kragen (27) erstreckt für eine vollständige Einfügung in das zylindrische Gehäuse durch den offenen Boden, um die Verriegelungsflansche (25) an dem ringförmigen Stützkragen (27) zu stützen,
ein Paar entgegengesetzter Abschnitte (29) mit vergrößertem Durchmesser, die sich nach unten von der Spitze (X) des zylindrischen Körpers (28) zu einem Ort erstrecken, der vertikal von dem Kragen beabstandet ist, wobei die Abschnitte mit dem äußeren Durchmesser des ringförmigen Kragens (27) entgegengesetzte Bereiche des kleineren äußeren Durchmessers definieren, die sich zwischen dem vertikal beabstandeten Ort des ringförmigen Kragens (27) erstrecken,
wobei die Verriegelungsflansche (25) eine vertikale Höhe aufweisen, die der vertikalen Höhe der Bereiche des kleineren äußeren Durchmessers entspricht, und wobei der innere Durchmesser der Flansche dem kleineren äußeren Durchmesser entspricht, so daß, wenn der zylindrische Körper (28) der Adapteranordnung vollständig in das zylindrische Gehäuse des Druckkolbenhalters (20) eingefügt ist, der Druckkolbenhalter relativ zu der Adapteranordnung (26) um 90° gedreht werden kann, wodurch eine vertikale Trennung verhindert werden wird,
eine Einrichtung (30, 34) zum lösbaren Halten des Druckkolbenhalters (20) und der Adapteranordnung (26) in der um 90° gedrehten Ausrichtung, und
eine Einrichtung (42) zum Sichern mit Gewinde der Adapteranordnung an der Spitze eines vertikal versetzbaren Kolbens.

2. Druckkolbenanordnung nach Anspruch 1, wobei die lösbare Hälteeinrichtung umfaßt:
eine nach außen vorgespannte Feststellerichtung (30), die an der Wand des zylindrischen Körpers (28) gesichert ist und eine Feststellvorrichtung (30) enthält, die sich nach außen durch ein Loch erstreckt, das in jedem der Abschnitte (29) mit vergrößertem Durchmesser gebildet ist, und gegenüberliegende Einschnitte (34), die in der inneren Oberfläche der Wand des zylindrischen Gehäuses gebildet sind zum Aufnehmen der Feststellvorrichtungen (30).

3. Druckkolbenanordnung nach Anspruch 2, wobei der Druckkolbenbasisabschnitt (14) einen sich nach außen erstreckenden ringförmigen Flansch (16) hat, und die Offnung (18) in der geschlossenen Spitze des zylindrischen Gehäuses (20) einen inneren Einschnitt (27) enthält, so daß, wenn der Druckkolbenbasisabschnitt vollständig dort hinein eingefügt ist, der ringförmige Flansch (16) des Basisabschnitts (14) in den Einschnitt und nach unten zwischen der geschlossenen Spitze des zylindrischen Gehäuses vorstehen wird, wodurch eine Tragefläche für die Spitze des zylindrischen Körpers (28) der Adapteranordnung (26) definiert wird, wenn sie vollständig in das zylindrische Gehäuse des Druckkolbenhalters (20) eingefügt ist.

## Revendications

1. Ensemble de poinçon destiné à être utilisé dans une machine à mouler le verre, comprenant :
- un poinçon (10) ayant une partie (12) à section décroissante et une partie de base (14) ;
- un support (20) de poinçon comprenant
- un boîtier cylindrique creux ayant une partie supérieure fermée et un fond ouvert (24) ;
- une ouverture (18) ménagée dans la partie supérieure fermée dudit boîtier cylindrique pour recevoir ladite partie de base (14) du poinçon ; et
- une paire de languettes de verrouillage (25) opposées, qui s'étendent axialement vers le bas et vers l'intérieur à partir du fond ouvert (24) dudit boîtier cylindrique ;
- un ensemble adaptateur (26) comprenant :
- une bague d'appui annulaire (27) ;
- un corps cylindrique creux (28) ayant une extrémité supérieure (X) et un diamètre extérieur plus petit que le diamètre extérieur de la bague, qui s'étend vers le haut à partir de cette bague (27), pour s'engager entièrement dans le boîtier cylindrique à travers le fond ouvert de manière à donner appui aux languettes de verrouillage (25) sur la bague d'appui annulaire (27) ;
- une paire de parties opposées (29), de diamètre agrandi, qui s'étendent vers le bas à partir de l'extrémité supérieure (X) dudit corps cylindrique (28), jusqu'à un point espacé verticalement de la bague, ces parties définissant, avec le diamètre extérieur de la bague annulaire (27), des régions opposées possédant le diamètre extérieur plus petit précité, qui s'étendent entre le point espacé verticalement et cette bague annulaire (27) ;
- les languettes de verrouillage (25) ayant une hauteur qui correspond à la hauteur verticale des régions du diamètre extérieur plus petit précité, et le diamètre intérieur des languettes correspondant à ce diamètre extérieur plus petit, de sorte que, lorsque le corps cylindrique (28) de l'ensemble adaptateur est entièrement engagé dans le boîtier cylindrique du support (20) de poinçon, ce support de poinçon peut être tourné de 90° par rapport à l'ensemble adaptateur (26), pour empêcher ainsi ces éléments de se séparer dans la direction verticale ;
- des moyens (30, 34) libérables servant à retenir le support (20) de poinçon et l'ensemble adaptateur (26) dans l'orientation tournée de 90° ; et
- des moyens (42) servant à fixer par vissage ledit ensemble adaptateur à la partie supérieure d'un piston qui peut se déplacer dans la direction verticale.

2. Ensemble de poinçon selon la revendication 1, dans lequel les moyens de retenue libérables comprennent des moyens à positionneur (30) sollicités vers l'extérieur, fixés à la paroi du corps cylindrique (28) et comprenant un positionneur (30) qui s'étend vers l'extérieur à travers un trou formé dans chacune des parties (29) de diamètre agrandi, et des évidements (34) opposés formés dans la surface intérieure de la paroi du boîtier cylindrique pour recevoir des positionneurs (30).

3. Ensemble de poinçon selon la revendication 2, dans lequel la partie de base (14) du poinçon possède une collerette (16) annulaire, s'étendant vers l'extérieur, et l'ouverture (18) prévue dans l'extrémité supérieure fermée du boîtier (20) cylindrique comprend un chambrage (27) intérieur, de sorte que, lorsque la partie de base du poinçon y est entièrement engagée, la collerette (16) annulaire de la partie (14) de base pénètre dans ce chambrage et se prolonge vers le bas au-delà de la partie supérieure fermée du boîtier cylindrique, en définissant ainsi une surface de portée pour la partie supérieure du corps (28) cylindrique de l'ensemble d'adaptateur (26) lorsqu'il est entièrement engagé dans le boîtier cylindrique du support (20) de poinçon.
